# EUROPÄISCHE PATENTSCHRIFT

(11) **EP 2 946 649 B1**
(45) Veröffentlichungstag und Bekanntmachung des Hinweises auf die Patenterteilung: **03.10.2018**
(21) Anmeldenummer: 15168771.2
(22) Anmeldetag: 21.05.2015
(51) Int. Cl.: A01D 34/00, E05B 65/10

(54) **SICHERUNG EINER SCHLIESSSTELLUNG EINES SCHLIESSORGANS EINER EINHAUSUNG**
SECURING A CLOSED POSITION OF A CLOSING BODY OF A HOUSING
SÉCURITÉ D'UNE POSITION DE FERMETURE D'UN ORGANE DE FERMETURE D'UNE ENCEINTE

(30) Priorität: 21.05.2014 DE 102014107190
(43) Veröffentlichungstag der Anmeldung: 25.11.2015
(73) Patentinhaber: Gartentechnik Münsterland e. K., 48268 Greven (DE)
(72) Erfinder: Kappelhoff, Hendrik, 48268 Greven (DE)
(74) Vertreter: Wiese, Gerhard

(56) Entgegenhaltungen:
- WO-A1-2009/121985
- DE-A1- 3 918 867
- DE-A1- 4 022 699
- DE-U1-202012 104 646
- FR-A5- 2 069 722
- US-B1- 7 185 478

## Beschreibung

Die Erfindung betrifft eine Einhausung für ein Mährobotersystem, die zur Aufnahme von wenigstens einer Ladestation des Mährobotersystems und als Garage für einen Mähroboter des Mährobotersystems ausgebildet ist, aufweisend wenigstens ein Schließorgan, das in einer Schließstellung eine Öffnung der Einhausung verschließt und in einer Offenstellung die Öffnung zumindest teilweise freigibt, und wenigstens eine Vorrichtung zum Sichern der Schließstellung des Schließorgans.

Zudem betrifft die Erfindung ein Verfahren zum Sichern einer Schließstellung eines Schließorgans einer wenigstens eine Ladestation beinhaltenden, eine Garage für einen Mähroboter ausbildenden Einhausung, wobei das Schließorgan in der Schließstellung eine Öffnung der Einhausung verschließt und in einer Offenstellung die Öffnung zumindest teilweise freigibt.

Ferner betrifft die Erfindung eine Verwendung einer Vorrichtung zum Sichern einer Schließstellung eines Schließorgans einer wenigstens eine Ladestation beinhaltenden, eine Garage für einen Mähroboter ausbildenden Einhausung.

Aufgrund einer üblicherweise recht begrenzten elektrischen Leistung eines aufladbaren elektrischen Energiespeichers eines Mähroboters sind in der Regel häufige Ladevorgänge des Energiespeichers erforderlich, um einen Mähvorgang durchzuführen zu können. Meist werden Mähvorgänge auch nachts selbsttätig von dem Mähroboter durchgeführt. Daher sollte eine Ladestation zum Laden des Energiespeichers, welche üblicherweise in einer eine Garage für den Mähroboter ausbildenden Einhausung angeordnet ist, Tag und Nacht für den Mähroboter erreichbar sein. Es besteht Bedarf, einen während eines Ladevorgangs innerhalb der Einhausung befindlichen Mähroboter gegen Vandalismus und Diebstahl zu sichern.

FR 2 069 722 A5 offenbart eine Nottür mit einem automatischen Öffnungsmechanismus. Die Türblätter der Nottür sind mit einem federbelasteten, schwenkbaren Bodenelement in ihren Schließstellungen gesichert. Tritt eine Person auf das Bodenelement, wird diese Sicherung der Schließstellungen gelöst und die Türblätter werden über ein Zugseilsystem mit Gewichten in ihre Offenstellungen bewegt.

DE 20 2012 104 646 U1 offenbart eine Abstellanlage für einen Mähroboter mit einer Überdachung, an der eine seitliche Einfahröffnung für den Mähroboter ausgebildet ist, und einer Toreinrichtung zum Verschließen der Einfahröffnung, die mittels einer an der Überdachung angeordneten Motoranordnung betätigbar ist. Es ist zudem eine Steuereinrichtung vorgesehen, welche die Motoranordnung nach einem vorgegebenen Steuerprogramm automatisch steuert. Mittels einer solchen Abstellanlage ist ein Schutz gegen Vandalismus und gegen Diebstahl des Mähroboters realisierbar. Hierzu kann die Abstellanlage eine Hochschiebesicherung aufweisen, die verhindert soll, dass ein Torpanzer der geschlossenen Toreinrichtung zum unbefugten Öffnen der Einfahröffnung nach oben geschoben werden kann.

Aufgabe der Erfindung ist es, eine automatisierte und kostengünstige Sicherung einer Schließstellung eines Schließorgans einer wenigstens eine Ladestation beinhaltenden, eine Garage für einen Mähroboter ausbildenden Einhausung zu ermöglichen.

Diese Aufgabe wird durch die unabhängigen Ansprüche gelöst. Vorteilhafte Ausgestaltungen sind in den abhängigen Ansprüchen angegeben, welche jeweils für sich genommen oder in verschiedener Kombination miteinander einen Aspekt der Erfindung darstellen können.

Die erfindungsgemäßeEinhausung für ein Mährobotersystem, die zur Aufnahme von wenigstens einer Ladestation des Mährobotersystems und als Garage für einen Mähroboter des Mährobotersystems ausgebildet ist, umfasst wenigstens ein Schließorgan, das in einer Schließstellung eine Öffnung der Einhausung verschließt und in einer Offenstellung die Öffnung zumindest teilweise freigibt, und wenigstens eine Vorrichtung zum Sichern der Schließstellung des Schließorgans. Die Vorrichtung umfasst wenigstens eine mittels des Mähroboters aktivierbare Auslöseeinheit und wenigstens einen mittels der Auslöseeinheit auslösbaren Sicherungsmechanismus, der in einem die Schließstellung sichernden Sicherungszustand einerseits an dem Schließorgan und andererseits an einem weiteren Bauteil der Einhausung angreift und der in einem Freigabezustand das Schließorgan freigibt.

Die erfindungsgemäße Vorrichtung ist mittels des Mähroboters betätigbar, so dass zur Sicherung der Schließstellung des Schließorgans der Einhausung kein Steuerprogramm und eine entsprechende kostenaufwändige und störanfällige Steuerelektronik erforderlich sind. Eine Aktivierung der Auslöseeinheit bzw. eine dadurch bewirkte Auslösung des Sicherungsmechanismus erfolgt vorzugsweise ausschließlich dann, wenn der Mähroboter bzw. eine Auswertungseinheit des Mähroboters selbsttätig feststellt, dass ein weiterer Ladevorgang an der Ladestation erforderlich ist, und daraufhin der Mähroboter in die Einhausung eingefahren ist, was zwangsläufig mit einer Aktivierung der Auslöseeinheit einhergeht. Seitens der Einhausung ist keine Berechnung oder Vorgabe von Ladezeitpunkten mittels einer hierzu eingerichteten Elektronik erforderlich, zu denen ein Ladevorgang erfolgen soll. Hierdurch sind Ladezeitpunkte individuell und optimal an den jeweiligen Alterungszustand des Energiespeichers angepasst, um die Lebensdauer des Energiespeichers nicht unnötig durch Ladevorgänge zu beeinträchtigen, welche für den jeweiligen Ladezustand des Energiespeichers ungünstig wären. Folglich ist ein mit der erfindungsgemäßen Vorrichtung ausgestattetes Mährobotersystem unter reduzierten Kosten betreibbar.

Die Aktivierungseinheit wird vorzugsweise dann aktiviert, wenn der Mähroboter eine Aktivierungsstellung relativ zu der Einhausung eingenommen hat, was mittels der Auslöseeinheit über geeignete Erfassungsmittel erfassbar ist. Hierzu kann die Aktivierungseinheit eine irgendwie geartete Sensorik und eine Auswertungseinheit umfassen. Die Auslöseeinheit kann auch zwei oder mehrere, insbesondere gleich oder unterschiedlich ausgebildete, Erfassungsmittel aufweisen. Die Vorrichtung kann auch zwei oder mehrere entsprechende Auslöseeinheiten aufweisen.

Zum Auslösen des Sicherungsmechanismus kann die Auslöseeinheit mechanisch oder kommunikationstechnisch bzw. berührungslos mit dem Sicherungsmechanismus verbunden sein. Der Sicherungsmechanismus kann wenigstens ein mittels der Auslöseeinheit ansteuerbares Stellglied umfassen. Zudem kann der Sicherungsmechanismus Mittel zum Erzeugen einer Vorspannkraft, beispielsweise mechanische Federn, aufweisen, wobei die Vorspannkraft beim Überführen des Sicherungsmechanismus von seinem Sicherungszustand in seinen Freigabezustand und/oder umgekehrt freigelassen bzw. auf weitere Bauteile des Sicherungsmechanismus wirken kann. Hierdurch kann der Sicherungszustand bzw. der Freigabezustand des Sicherungsmechanismus gesichert werden, ohne dass hierzu Energie von außen zugeführt werden muss. Dass der Sicherungsmechanismus das Schließorgan in seiner Freigabestellung freigibt, bedeutet, dass das Schließorgan bei in seiner Freigabestellung befindlichem Sicherungsmechanismus frei zwischen seiner Schließstellung und seiner Offenstellung hin und her bewegt werden kann. Die Vorrichtung kann auch zwei oder mehrere entsprechende Sicherungsmechanismen aufweisen.

Eine Einhausung kann im Rahmen der Erfindung eine separat von Gebäuden auf einem von dem Mähroboter zu bearbeitenden Areal angeordnete Einhausung sein. Alternativ kann die Einhausung in Form eines vorhandenen Gebäudes, beispielsweise einer Garage für ein Fahrzeug, ein Wohn- oder Geschäftshaus oder dergleichen, gegeben sein, an dem die Öffnung, beispielsweise ein Wanddurchbruch, der Einhausung und das Schließorgan angeordnet sind. Wesentlich für die Einhausung ist lediglich, dass sie eine Garage für den Mähroboter ausbildet. Ob die Einhausung daneben noch anderweitig verwendet wird, ist für die Erfindung unerheblich.

Gemäß einer vorteilhaften Ausgestaltung ist die Auslöseeinheit durch einen körperlichen Kontakt mit dem Mähroboter oder berührungslos durch den Mähroboter aktivierbar ausgebildet. In ersterem Fall kann die Auslöseeinheit wenigstens ein Betätigungselement aufweisen, welches durch den körperlichen Kontakt mit dem Mähroboter bewegt wird. In letzterem Fall kann die Auslöseeinheit eine elektronische Sensoreinrichtung aufweisen. Des Weiteren kann die Auslöseeinheit kommunikationstechnisch mit einer Elektronik des Mähroboters verbunden sein, um berührungslos oder über einen elektrischen Kontakt ein Auslösesignal empfangen zu können. Hierzu kann an dem Mähroboter wenigstens einen Signalgeber zum Erzeugen eines Auslösesignals und zum Senden des Auslösesignals an die Auslöseeinheit angeordnet sein. Der Mähroboter kann bereits bei seiner Herstellung mit einem solchen Signalgeber ausgestattet werden oder es wird ein bereits vorhandener Mähroboter mit dem Signalgeber nachgerüstet. Der Mähroboter kann zudem wenigstens einen Empfänger zum Empfangen von Signalen der Auslöseeinheit aufweisen. Der Signalgeber kann zusätzlich dazu eingesetzt werden, ein Schließorgan eines Hindernisses, beispielsweise eines Zauns, auf einem von dem Mähroboter zu bearbeitenden Areal in seine Offenstellung zu überführen, so dass an dem Hindernis eine Durchfahröffnung für den Mähroboter zeitweilig freigegeben wird. Hierzu kann das Schließorgan an dem Hindernis funktionstechnisch mit einer Antriebseinheit kombiniert werden, mit der das Schließorgan von seiner Offenstellung in eine die Durchfahröffnung verschließende Schließstellung bewegt werden kann, und umgekehrt. Das Schließorgan und die Antriebseinheit können funktionstechnisch mit einer Aktivierungseinheit kombiniert sein, die durch das Auslösesignal des Signalgebers aktivierbar ist und hierdurch die Antriebseinheit zum Bewegen des Schließorgans ansteuert. Zudem kann die Schließstellung des Schließorgans mittels einem Sicherungsmechanismus gesichert sein, der durch Empfang des Auslösesignals des Signalgebers des Mähroboters von einem die Schließstellung des Schließorgans sichernden Sicherungszustand, in dem der Sicherungsmechanismus einerseits an dem Schließorgan des Hindernisses und andererseits an einem weiteren Bauteil des Hindernisses angreift, in einen Freigabezustand überführt werden kann, in dem der Sicherungsmechanismus das Schließorgan freigibt. Das Hindernis kann hierbei mit einen signaltechnisch mit der Aktivierungseinheit verbindbaren Empfänger zum Empfangen des Auslösesignals des Signalgebers des Mähroboters aufweisen. Die Aktivierungseinheit kann eingerichtet sein, nach Empfang des Auslösesignals den Sicherungsmechanismus von seinem Sicherungszustand in seinen Freigabezustand zu überführen.

Nach einer weiteren vorteilhaften Ausgestaltung weist die Auslöseeinheit wenigstens eine durch den körperlichen Kontakt mit dem Mähroboter betätigbare Betätigungseinheit auf, über deren Betätigung die Auslöseeinheit aktivierbar. Die Betätigungseinheit kann ein Betätigungselement, beispielsweise eine befahrbare Wippe oder dergleichen, aufweisen, welches durch den körperlichen Kontakt mit dem Mähroboter in eine Auslösestellung gebracht werden kann. Die Auslöseeinheit kann auch zwei oder mehrere, insbesondere gleich oder unterschiedlich ausgebildete, Betätigungseinheiten aufweisen.

Eine weitere vorteilhafte Ausgestaltung sieht vor, dass die Auslöseeinheit wenigstens eine elektronische Sensoreinheit aufweist, die eingerichtet ist, eine die Auslöseeinheit aktivierende Aktivierungsstellung des Mähroboters relativ zu der Einhausung zu erfassen. Die elektronische Sensoreinheit kann beispielsweise eine Lichtschranke, einen Infrarotsensor oder dergleichen umfassen. Mittels der elektronischen Sensoreinheit kann insbesondere eine berührungslose Aktivierung der Auslöseeinheit ermöglicht sein. Die Auslöseeinheit kann auch zwei oder mehrere, insbesondere gleich oder unterschiedlich ausgebildete, elektronische Sensoreinheiten aufweisen.

Vorteilhafterweise umfasst die Auslöseeinheit wenigstens eine Blockiereinheit zum Blockieren des Freigabezustands des Sicherungsmechanismus in einem deaktivierten Zustand der Auslöseeinheit, wobei die Blockiereinheit bei aktivierter Auslöseeinheit den Sicherungsmechanismus freigibt. Hierdurch kann beispielsweise ein mit Kraft in Richtung einer Verriegelungsstellung vorbelastetes Verriegelungselement der Sicherungseinheit bei deaktivierter Auslöseeinheit blockiert und bei aktivierter Auslöseeinheit freigegeben werden, um in seine Verriegelungsstellung zu gelangen. Die Auslöseeinheit kann auch zwei oder mehrere, insbesondere gleich oder unterschiedlich ausgebildete, Blockiereinheiten aufweisen.

Es wird des Weiteren als vorteilhaft erachtet, wenn der Sicherungsmechanismus wenigstens ein Verriegelungselement aufweist, welches bei in seinem Sicherungszustand befindlichem Sicherungsmechanismus einerseits an dem Schließorgan und andererseits an einem weiteren Bauteil der Einhausung angreift und bei in seinem Freigabezustand befindlichem Sicherungsmechanismus das Schließorgan freigibt. Das Verriegelungselement kann zwischen seiner Verriegelungsstellung und seiner Freigabestellung hin und her bewegbar an der Einhausung gelagert sein und in seiner Verriegelungsstellung mit einer komplementär ausgebildeten Verriegelungseinheit an dem Schließorgan zusammenwirken. Der Sicherungsmechanismus kann zur Verbesserung der Sicherung auch zwei oder mehrere, insbesondere gleich oder unterschiedlich ausgebildete, Verriegelungselemente aufweisen.

Das Schließorgan kann als Rolltor, Sektionaltor oder als um eine im oberen Bereich der Einhausung angeordnete, horizontal verlaufende Achse pendelndes, starres Torblatt ausgebildet sein. Die Einhausung kann ein Gerüst aus Profilen, insbesondere aus Metall, aufweisen, an dem flächige Wandelemente befestigt sind.

Nach einer vorteilhaften Ausgestaltung umfasst die Einhausung bodenseitige Verankerungsmittel, über welche die Einhausung am Erdboden verankerbar ist. Hierdurch ist die Einhausung gegen Vandalismus, Diebstahl und Wettereinflüsse sicherbar. Die bodenseitigen Verankerungsmittel können Bodenanker und eventuell ein zumindest teilweise im Erdboden anordbares Fundament aufweisen.

Gemäß einer weiteren vorteilhaften Ausgestaltung umfasst die Einhausung Befestigungsmittel, über welche wenigstens eine Photovoltaikeinheit an der Einhausung befestigbar ist. Hierdurch kann innerhalb der Einhausung eine Sekundärbatterie angeordnet werden, welche über die Photovoltaikeinheit aufladbar ist. Dies macht die Einhausung bzw. ein damit ausgestattetes Mährobotersystem unabhängig von gegebenen Anschlüssen an ein örtliches Energieversorgungsnetz. Damit ist eine Kostenersparnis bezüglich der Inbetriebnahme eines entsprechenden Mährobotersystems verbunden, insbesondere da kein Verlegen von elektrischen Leitungen und damit verbundene Arbeiten erforderlich sind. Stattdessen kann ein entsprechendes Mährobotersystem energetisch autark betrieben werden. Überschüssig von der Photovoltaikeinheit erzeugte elektrische Energie kann einer anderweitigen Verwendung, beispielsweise einer Versorgung von Beleuchtungseinrichtungen oder dergleichen, zugeführt werden.

Ein erfindungsgemäßer Signalgeber zum berührungslosen Aktivieren einer Auslöseeinheit einer Vorrichtung einer Einhausung nach einer der vorgenannten Ausgestaltungen oder einer beliebigen Kombination derselben ist an einem Mähroboter anordbar und eingerichtet, wenigstens ein Auslösesignal zu erzeugen und an die Auslöseeinheit zu senden.

Der Signalgeber dient der unidirektionalen oder bidirektionalen, berührungslosen Kommunikation mit der Auslöseeinheit, um die Auslöseeinheit mittels eines mit dem Signalgeber ausgestatteten Mähroboters aktivieren zu können. Der Signalgeber kann bei einem neu hergestellten Mähroboter bereits verbaut sein. Alternativ können bereits vorhandene Mähroboter mit dem Signalgeber nachgerüstet werden. Der Signalgeber kann zur Aussendung des Auslösesignals wenigstens einen Sender, beispielsweise einen Funksender, einen Lichtsender oder dergleichen, aufweisen.

Nach dem erfindungsgemäßen Verfahren zum Sichern einer Schließstellung eines Schließorgans einer wenigstens eine Ladestation beinhaltenden, eine Garage für einen Mähroboter ausbildenden Einhausung, wobei das Schließorgan in der Schließstellung eine Öffnung der Einhausung verschließt und in einer Offenstellung die Öffnung zumindest teilweise freigibt, wird zum Sichern der Schließstellung eine mittels des Mähroboters betätigbare Sicherungseinrichtung eingesetzt.

Mit diesem Verfahren sind die oben mit Bezug auf die Vorrichtung genannten Vorteile entsprechend verbunden. Die Sicherungseinrichtung umfasst vorzugsweise wenigstens eine Vorrichtung nach einer der oben genannten Ausgestaltungen oder einer beliebigen Kombination derselben.

Es wird des Weiteren eine erfindungsgemäße Verwendung einer Vorrichtung nach einer der vorgenannten Ausgestaltungen oder einer beliebigen Kombination derselben zum Sichern einer Schließstellung eines Schließorgans einer wenigstens eine Ladestation beinhaltenden, eine Garage für einen Mähroboter ausbildenden Einhausung vorgeschlagen. Mit dieser Verwendung sind die oben mit Bezug auf die Vorrichtung genannten Vorteile entsprechend verbunden.

Im Folgenden wird die Erfindung unter Bezugnahme auf die anliegenden Figuren anhand eines bevorzugten Ausführungsbeispiels exemplarisch erläutert, wobei die nachfolgend dargestellten Merkmale sowohl jeweils für sich genommen als auch in unterschiedlicher Kombination miteinander einen Aspekt der Erfindung darstellen können. Es zeigen
- Figur 1:: eine schematische Seitendarstellung eines Ausführungsbeispiels für eine erfindungsgemäße Einhausung mit ungesicherter Schließstellung des Schließorgans und
- Figur 2:: eine schematische Seitenansicht der in Figur 1 gezeigten Einhausung mit gesicherter Schließstellung des Schließorgans.

In den Figuren sind funktional gleiche Bauteile mit denselben Bezugszeichen versehen.

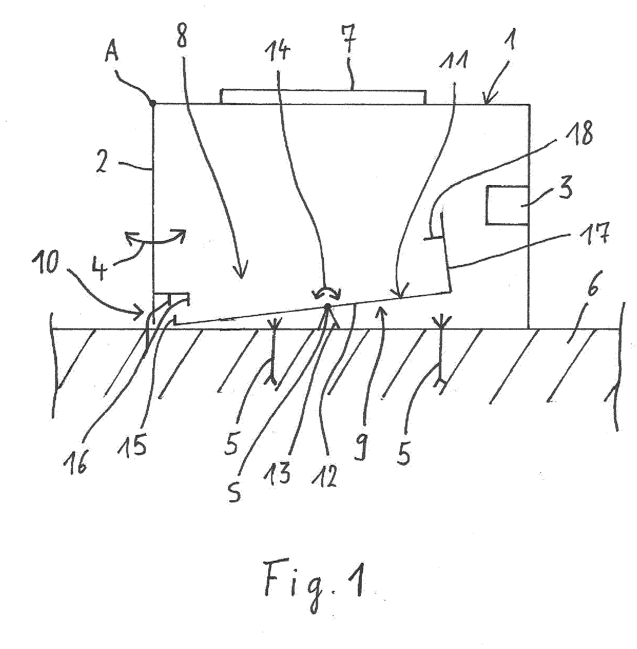

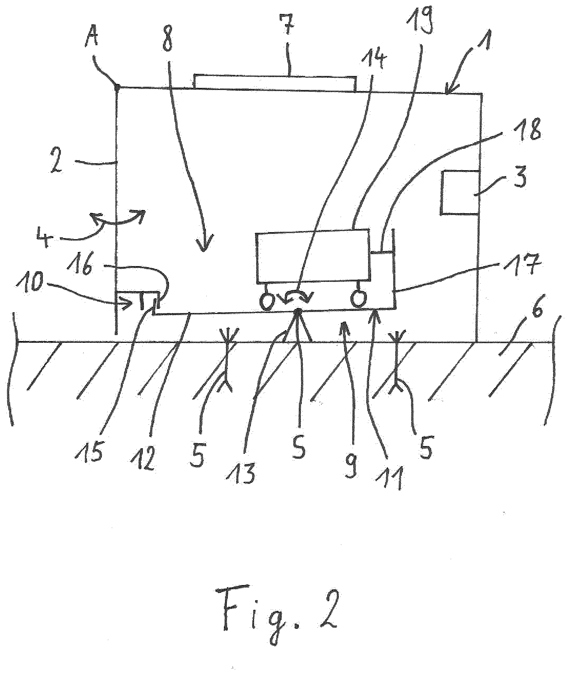

Figur 1 zeigt eine schematische Seitendarstellung eines Ausführungsbeispiels für eine erfindungsgemäße Einhausung 1 für ein Mährobotersystem mit ungesicherter Schließstellung des Schließorgans 2 der Einhausung 1. Die Einhausung 1 ist zur Aufnahme einer Ladestation 3 in Form einer Sekundärbatterie des Mährobotersystems und als Garage für einen in Figur 2 gezeigten Mähroboter des Mährobotersystems ausgebildet.

Das Schließorgan 2 ist als starres Torblatt ausgebildet, welches um eine horizontale Achse A entsprechend dem Doppelpfeil 4 pendelnd beweglich an der übrigen Einhausung 1 aufgehängt ist. Das Schließorgan 2 verschließt in der gezeigten Schließstellung eine linke Öffnung der Einhausung 1 und gibt in einer Offenstellung die Öffnung zumindest teilweise frei.

Die Einhausung 1 umfasst des Weiteren bodenseitige Verankerungsmittel 5, über welche die Einhausung 1 am Erdboden 6 verankerbar ist. Zudem umfasst die Einhausung 1 Befestigungsmittel 7, über welche wenigstens eine nicht gezeigte Photovoltaikeinheit an der Einhausung 1 befestigbar ist, mit der die Ladestation 3 bzw. die Sekundärbatterie mit elektrischer Energie versorgt werden kann.

Die Einhausung 1 umfasst ferner Vorrichtung 8 zum Sichern der Schließstellung des Schließorgans 2 der Einhausung 1. Die Vorrichtung 8 umfasst eine mittels des Mähroboters aktivierbare Auslöseeinheit 9 und eine mittels der Auslöseeinheit 8 auslösbaren Sicherungsmechanismus 10, der in einem die Schließstellung sichernden Sicherungszustand, wie er in Figur 2 gezeigt ist, einerseits an dem Schließorgan 2 und andererseits an einem weiteren Bauteil der Einhausung 1 angreift und der in dem gezeigten Freigabezustand das Schließorgan 2 freigibt.

Die Auslöseeinheit 8 umfasst eine Wippe 11 mit einem von dem Mähroboter befahrbaren Wippenkörper 12, welcher um eine an einem Ständer 13 der Wippe 11 angeordnete, horizontal ausgerichtete Achse S gemäß dem Doppelpfeil 14 beweglich gelagert ist. Der Wippenkörper 12 ist in dieser Ausführungsform der Erfindung das Bauteil der Einhausung 1, an dem der Sicherungsmechanismus zur Sicherung der Schließstellung des Schließorgans angreifen kann. An dem rechten Ende des Wippenkörpers 12 ist ein vertikales Bauteil 17 mit einem Stoppelement 18 angeordnet, dessen Funktion aus Figur 2 deutlicher wird. Der Schwerpunkt des Wippenkörpers 12 liegt in Figur 1 links von der Achse S. Der Wippenkörper 12 bildet bei der gezeigten Ausführungsform der Erfindung die Betätigungseinheit der Auslöseeinheit 9, welche über einen körperlichen Kontakt mit dem Mähroboter betätigbar ist und über deren Betätigung die Auslöseeinheit 9 aktivierbar ist.

Der Sicherungsmechanismus 10 umfasst ein an dem linken Ende des Wippenkörpers 12 angeordnetes Verriegelungselement 15 und zwei an der Innenseite des Schließorgans 2 angeordnete Verriegelungselemente 16, welche entsprechend Figur 2 zur Sicherung der Schließstellung des Schließorgans 2 in Eingriff miteinander gebracht werden können.

Figur 2 zeigt eine schematische Seitenansicht der in Figur 1 gezeigten Einhausung 1 mit gesicherter Schließstellung des Schließorgans 2. Innerhalb der Einhausung 1 ist ein Mähroboter 19 angeordnet, der soweit auf den Wippenkörper 12 aufgefahren ist, bis er, wie gezeigt, in körperlichem Kontakt mit dem Stoppelement 18 steht. An dem Stoppelement 18 kann ein Anschluss zur elektrisch leitenden Verbindung einer nicht gezeigten Sekundärbatterie des Mähroboters 19 mit der Ladestation 3 angeordnet sein. Der Schwerpunkt des aus dem Wippenkörper 12 und dem Mähroboter 19 in der gezeigten Relativanordnung gebildeten Systems liegt in Figur 2 rechts von der Achse S. Hierdurch wurde der Wippenkörper 12 im Uhrzeigersinn um die Achse S gedreht, bis das Verriegelungselement 15 zwischen die beiden Verriegelungselemente 16 greift, wodurch eine Sicherung der gezeigten Schließstellung des Schließorgans 2 bewirkt wird, welches dadurch nicht mehr entsprechend dem Doppelpfeil 4 bewegbar ist. Ist der Ladevorgang abgeschlossen, kann der Mähroboter 19 wieder in Figur 2 nach links auf dem Wippenkörper 12 fahren, wodurch der Wippenkörper im Gegenuhrzeigersinn um die Achse S wieder in seine in Figur 1 gezeigte Stellung bewegt wird. Dann ist das Schließorgan 2 wieder freigegeben und kann von dem weiter nach links fahrenden Mähroboter 19 aufgestoßen werden. Folglich ist die Auslöseeinheit 9 durch einen körperlichen Kontakt mit dem Mähroboter 19 aktivierbar ausgebildet. An dem Mähroboter 19 kann zu einer berührungslosen Aktivierung einer Auslöseeinheit, die andersartig als in den Figuren 1 und 2 ausgebildet ist, alternativ wenigstens ein Signalgeber 20 angeordnet sein, der eingerichtet ist, wenigstens ein Auslösesignal zu erzeugen und an die Auslöseeinheit zu senden.

### Bezugszeichenliste:

- 1: Einhausung
- 2: Schließorgan
- 3: Ladestation
- 4: Doppelpfeil
- 5: Verankerungsmittel
- 6: Erdboden
- 7: Befestigungsmittel
- 8: Vorrichtung
- 9: Auslöseeinheit
- 10: Sicherungsmechanismus
- 11: Wippe
- 12: Wippenkörper
- 13: Ständer
- 14: Doppelpfeil
- 15: Verriegelungselement
- 16: Verriegelungselement
- 17: Bauteil
- 18: Stoppelement
- 19: Mähroboter
- 20: Signalgeber
- A: Achse
- S: Achse

## Patentansprüche

1. Einhausung (1) für ein Mährobotersystem, die zur Aufnahme von wenigstens einer Ladestation (3) des Mährobotersystems und als Garage für einen Mähroboter (19) des Mährobotersystems ausgebildet ist, aufweisend wenigstens ein Schließorgan (2), das in einer Schließstellung eine Öffnung der Einhausung (1) verschließt und in einer Offenstellung die Öffnung zumindest teilweise freigibt, und wenigstens eine Vorrichtung (8) zum Sichern der Schließstellung des Schließorgans (2), **dadurch gekennzeichnet, dass** die Vorrichtung (8) wenigstens eine mittels des Mähroboters (19) aktivierbare Auslöseeinheit (9) und wenigstens einen mittels der Auslöseeinheit (9) auslösbaren Sicherungsmechanismus (10), der in einem die Schließstellung sichernden Sicherungszustand einerseits an dem Schließorgan (2) und andererseits an einem weiteren Bauteil der Einhausung (1) angreift und der in einem Freigabezustand das Schließorgan (2) freigibt, aufweist.

2. Einhausung (1) nach Anspruch 1, **dadurch gekennzeichnet, dass** die Auslöseeinheit (9) durch einen körperlichen Kontakt mit dem Mähroboter (19) oder berührungslos durch den Mähroboter (19) aktivierbar ausgebildet ist.

3. Einhausung (1) nach Anspruch 2, **dadurch gekennzeichnet, dass** die Auslöseeinheit (9) wenigstens eine durch den körperlichen Kontakt mit dem Mähroboter (19) betätigbare Betätigungseinheit aufweist, über deren Betätigung die Auslöseeinheit (9) aktivierbar ist.

4. Einhausung (1) nach Anspruch 2, **dadurch gekennzeichnet, dass** die Auslöseeinheit (9) wenigstens eine elektronische Sensoreinheit aufweist, die eingerichtet ist, eine die Auslöseeinheit (9) aktivierende Aktivierungsstellung des Mähroboters (19) relativ zu der Einhausung (1) zu erfassen.

5. Einhausung (1) nach einem der Ansprüche 1 bis 4, **dadurch gekennzeichnet, dass** die Auslöseeinheit (9) wenigstens eine Blockiereinheit zum Blockieren des Freigabezustands des Sicherungsmechanismus (10) in einem deaktivierten Zustand der Auslöseeinheit (9) aufweist, wobei die Blockiereinheit bei aktivierter Auslöseeinheit (9) den Sicherungsmechanismus (10) freigibt.

6. Einhausung (1) nach einem der Ansprüche 1 bis 5, **dadurch gekennzeichnet, dass** der Sicherungsmechanismus (10) wenigstens ein Verriegelungselement (15, 16) aufweist, welches bei in seinem Sicherungszustand befindlichem Sicherungsmechanismus (10) einerseits an dem Schließorgan (2) und andererseits an einem weiteren Bauteil der Einhausung (1) angreift und bei in seinem Freigabezustand befindlichem Sicherungsmechanismus (10) das Schließorgan (2) freigibt.

7. Einhausung (1) nach einem der Ansprüche 1 bis 6, **gekennzeichnet durch** bodenseitige Verankerungsmittel (5), über welche die Einhausung (1) am Erdboden (6) verankerbar ist.

8. Einhausung (1) nach einem der Ansprüche 1 bis 7, **gekennzeichnet durch** Befestigungsmittel (7), über welche wenigstens eine Photovoltaikeinheit an der Einhausung (1) befestigbar ist.

9. Verfahren zum Sichern einer Schließstellung eines Schließorgans (2) einer wenigstens eine Ladestation (3) beinhaltenden, eine Garage für einen Mähroboter (19) ausbildenden Einhausung (1), wobei das Schließorgan (2) in der Schließstellung eine Öffnung der Einhausung (1) verschließt und in einer Offenstellung die Öffnung zumindest teilweise freigibt, **dadurch gekennzeichnet, dass** zum Sichern der Schließstellung eine mittels des Mähroboters (19) betätigbare Sicherungseinrichtung eingesetzt wird.

10. Verwendung einer Vorrichtung (8) nach einem der Ansprüche 1 bis 8 zum Sichern einer Schließstellung eines Schließorgans (2) einer wenigstens eine Ladestation (3) beinhaltenden, eine Garage für einen Mähroboter (19) ausbildenden Einhausung (1).

## Claims

1. A housing (1) for a robotic mowing system which is designed to contain at least one charging station (3) for the robotic mowing system and which is configured as a garage for a robotic mower (19) of the robotic mowing system, having at least one closing member (2) which seals an opening in the housing (1) when it is in a closed position and at least partially releases the opening when it is in an open position, and at least one device (8) for securing the closed position of the closing member (2),
**characterized in that** the device (8) comprises at least one triggering unit (9) which can be activated by the robotic mower (19), and at least one securing mechanism (10) which can be triggered by the triggering unit (9) and which, when in a secured state, in which the closed position is secured, engages with the closing member (2) on one side and with another component of the housing (1) on the other side and which, when in a released state, releases the closing member (2).

2. The housing (1) according to claim 1, **characterized in that** the triggering unit (9) is designed to be able to be activated by physical contact with the robotic mower (19) or contactlessly by the robotic mower (19).

3. The housing (1) according to claim 2, **characterized in that** the triggering unit (9) has at least one operating unit which is operable by physical contact with the robotic mower (19), wherein the operation of the operating unit can activate the triggering unit (9).

4. The housing (1) according to claim 2, **characterized in that** the triggering unit (9) has at least one electronic sensor unit which is configured to detect an activation position of the robotic mower (19) relative to the housing (1), which activates the triggering unit (9).

5. The housing (1) according to any of claims 1 to 4, **characterized in that** the triggering unit (9) has at least one blocking unit to block the released state of the securing mechanism (10) when the triggering unit (9) is in a deactivated state, wherein the blocking unit releases the securing mechanism (10) when the triggering unit (9) is active.

6. The housing (1) according to any of claims 1 to 5, **characterized in that** the securing mechanism (10) has at least one locking element (15, 16) which engages with the closing member (2) and with another component of the housing (1) when the securing mechanism (10) is in its secured state and releases the closing member (2) when the securing mechanism (10) is in its released state.

7. The housing (1) according to any of claims 1 to 6, **characterized by** anchoring means (5) on the underside, by means of which the housing (1) can be anchored to the ground (6).

8. The housing (1) according to any of claims 1 to 7, **characterized by** fastening means (7), by means of which at least one photovoltaic unit can be fastened to the housing (1).

9. A method to secure a closed position for a closing member (2) of a housing (1), which contains at least one charging station (3) and which is configured as a garage for a robotic mower (19), wherein the closing member (2) closes an opening in the housing (1) when in the closed position and at least partially releases the opening when in an open position, **characterized in that** a securing device which is able to be activated by the robotic mower (19) is used to secure the closed position.

10. Use of a device (8) according to any of claims 1 to 8 to secure a closed position of a closing member (2) of a housing (1), which contains at least one charging station (3) and which is configured as a garage for a robotic mower (19).

## Revendications

1. Boîtier (1) destiné à un système de robot-tondeuse, ledit boîtier étant conçu pour recevoir au moins une station de charge (3) du système de robot-tondeuse et réalisé sous la forme d'un garage destiné à un robot-tondeuse (19) du système de robot-tondeuse, comportant au moins un organe de fermeture (2) qui ferme une ouverture du boîtier (1) en position de fermeture et qui libère au moins partiellement l'ouverture en position d'ouverture, et au moins un dispositif (8) destiné à sécuriser la position de fermeture de l'organe de fermeture (2), **caractérisé en ce que** le dispositif (8) comporte au moins une unité de déclenchement (9) activable à l'aide du robot-tondeuse (19) et au moins un mécanisme de sécurité (10) qui est déclenchable à l'aide de l'unité de déclenchement (9), qui s'engage, dans un état de sécurité sécurisant la position de fermeture, d'une part avec l'organe de fermeture (2) et d'autre part avec un autre composant du boîtier (1) et qui libère l'organe de fermeture (2) dans un état de libération.

2. Boîtier (1) selon la revendication 1, **caractérisé en ce que** l'unité de déclenchement (9) est conçue de manière à pouvoir être activée par un contact physique avec le robot-tondeuse (19) ou sans contact par le robot-tondeuse (19).

3. Boîtier (1) selon la revendication 2, **caractérisé en ce que** l'unité de déclenchement (9) comporte au moins une unité de commande qui peut être actionnée par le contact physique avec le robot-tondeuse (19) et dont l'actionnement permet d'activer l'unité de déclenchement (9).

4. Boîtier (1) selon la revendication 2, **caractérisé en ce que** l'unité de déclenchement (9) comporte au moins une unité de détection électronique qui est configurée pour détecter une position d'activation du robot-tondeuse (19) par rapport au boîtier (1), laquelle active l'unité de déclenchement (9).

5. Boîtier (1) selon l'une des revendications 1 à 4, **caractérisé en ce que** l'unité de déclenchement (9) comporte au moins une unité de blocage destinée à bloquer l'état de libération du mécanisme de sécurité (10) dans un état désactivé de l'unité de déclenchement (9), l'unité de blocage libérant le mécanisme de sécurité (10) lorsque l'unité de déclenchement (9) est activée.

6. Boîtier (1) selon l'une des revendications 1 à 5, **caractérisé en ce que** le mécanisme de sécurité (10) comporte au moins un élément de verrouillage (15, 16), lequel s'engage, lorsque le mécanisme de sécurité (10) se trouve en état de sécurité, d'une part avec l'organe de fermeture (2) et d'autre part avec un autre composant du boîtier (1) et libère l'organe de fermeture (2) lorsque le mécanisme de sécurité (10) se trouve dans son état de libération.

7. Boîtier (1) selon l'une des revendications 1 à 6, **caractérisé par** un moyen d'ancrage (5), situé du côté du sol, par l'intermédiaire duquel le boîtier (1) peut être ancré au sol (6).

8. Boîtier (1) selon l'une des revendications 1 à 7, **caractérisé par** des moyens de fixation (7), par l'intermédiaire desquels au moins une unité photovoltaïque peut être fixée au boîtier (1).

9. Procédé de sécurisation d'une position de fermeture d'un organe de fermeture (2) d'un boîtier formant un garage destiné à un robot-tondeuse (19) et contenant au moins une station de charge (3), l'organe de fermeture (2) fermant une ouverture du boîtier (1) dans la position de fermeture et libérant au moins partiellement l'ouverture dans une position d'ouverture, **caractérisé en ce qu'**un dispositif de sécurité actionnable à l'aide du robot-tondeuse (19) est utilisé pour sécuriser la position de fermeture.

10. Utilisation d'un dispositif (8) selon l'une des revendications 1 à 8 pour sécuriser une position de fermeture d'un organe de fermeture (2) d'un boîtier (1) formant un garage destiné un robot-tondeuse (19) et contenant au moins une station de charge (3).
